# EUROPEAN PATENT APPLICATION

(11) **EP 2 036 665 A1**
(43) Date of publication of application: **18.03.2009**
(21) Application number: 08163618.5
(22) Date of filing: 03.09.2008
(51) Int. Cl.: B23Q 11/00, B23K 7/00

(54) **Collection device, particularly for collecting process waste**

(30) Priority: 13.09.2007 IT PD20070291
(71) Applicant: Siderurgica Simonato S.r.l., 36030 Sarcedo VI (IT)
(72) Inventor: Simonato, Dario, 36030 Zugliano VI (IT)
(74) Representative: Modiano, Micaela Nadia

(57) **Abstract**

A collection device (10), particularly for collecting process waste, which can be accommodated in a waste drop channel (11) that lies below the waste discharge grille (12), the device (10) comprising a box-like body (13) that is adapted to accommodate motor means connected to means (15) for moving the box-like body (13) along an anteroposterior direction. At least one front scraper (16a) and at least one rear scraper (16b), adapted to collect the waste, are connected to the box-like body (13).

## Description

The present invention relates to a collection device, particularly for collecting waste from metal plate cutting work.

Currently, particularly processes for cutting with plasma, laser or the like are performed by resting the body being cut against a discharge grille, through which the cutting waste falls into one or more drop channels that lie below it.

When the capacity to receive waste is saturated, these channels must be emptied.

The operation for collecting the waste to free the channels is currently performed by removing the discharge grille and removing the waste substantially with the aid of shovels.

Therefore, this solution requires suspending the work of the machine, during the removal of the waste, and the use of labor intended for this removal operation.

This is to the detriment of the productivity of the cutting machine and has the additional drawback of diverting workforce in the operations for waste removal.

The aim of the present invention is to provide a collection device, particularly for collecting waste from machining to cut metal plates, that allows to remove the waste from the drop channel without requiring simultaneous suspension of the cutting operations.

Within this aim, an object of the invention is to provide a collection device that collects the waste automatically, removing it from the drop channel.

Another object of the invention is to provide a collection device that is structurally simple and easy to use and can be manufactured with low costs.

This aim and these and other objects, which will become better apparent hereinafter, are achieved by a collection device, particularly for collecting waste from metal plate cutting work, which can be accommodated in a waste drop channel that lies below the waste discharge grille, characterized in that it comprises a box-like body that is adapted to accommodate motor means connected to means for moving said box-like body in an anteroposterior direction, at least one front scraper and at least one rear scraper, adapted to collect the waste, being connected to said box-like body.

Further characteristics and advantages of the invention will become better apparent from the following detailed description of a preferred but not exclusive embodiment of the collection device according to the invention, illustrated by way of non-limiting example in the accompanying drawings, wherein:
Figure 1 is a perspective view of a collection device according to the invention in the operating configuration;
Figure 2 is a perspective view of a collection device according to the invention in a first embodiment;
Figure 3 is a top plan view of the first embodiment of the collection device according to the invention shown in Figure 2;
Figure 4 is a perspective view of a collection device according to the invention in a second embodiment;
Figure 5 is a top plan view of the second embodiment of the collection device according to the invention shown in Figure 4.

It is noted that anything found to be already known during the patenting process is understood not to be claimed and to be the subject of a disclaimer.

With reference to the figures, the reference numeral 10 generally designates a collection device, particularly for collecting waste from metal plate cutting work, which can be accommodated in a waste drop channel 11, which lies below a waste discharge grille 12.

A particularity of the collection device 10 according to the invention is that it comprises a box-like body 13 that is adapted to accommodate motor means, which conveniently comprise an electric motor 14 and are connected to means 15 for moving the box-like body along an anteroposterior direction.

At least one front scraper 16a and at least one rear scraper 16b, adapted to collect the waste, are connected to the box-like body 13.

Preferably, the scrapers 16a and 16b engage slidingly a bottom 17 of the channel 11 along its entire width, simultaneously engaging portions of its side walls 18 that are adjacent to the bottom 17.

Further, they are conveniently pivoted to the box-like body 13 so that they can rotate about axes A that lie substantially transversely to such anteroposterior direction.

In this manner, the scrapers 16a and 16b, at the ends of the channel 11, can rotate about the axes A in order to discharge the collected waste.

Conveniently, the collection device 10 comprises electric batteries 19 for supplying power to the electric motor 14, which are accommodated in the box-like body 13.

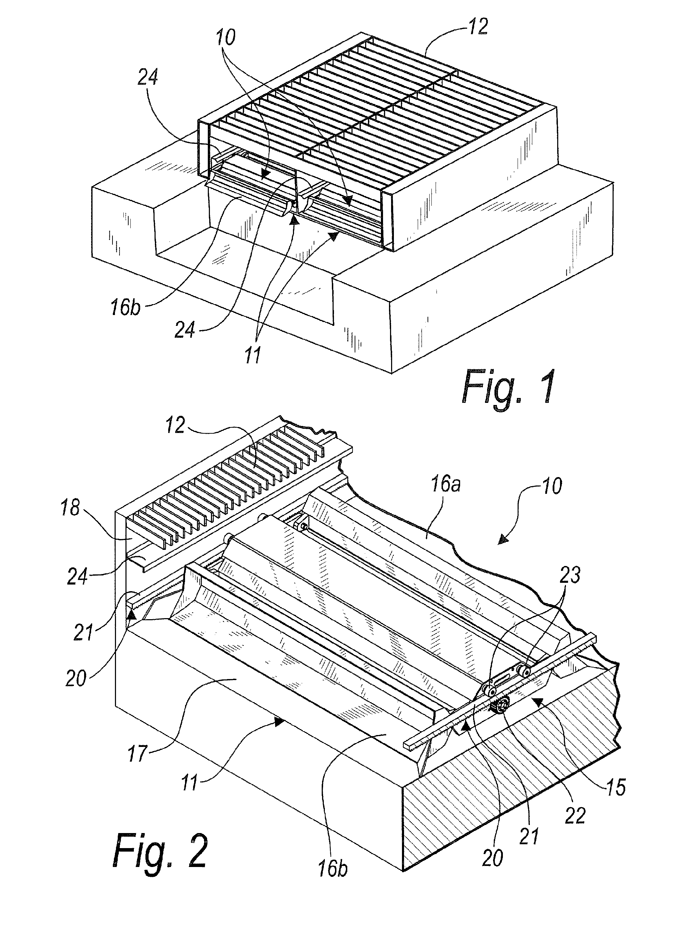

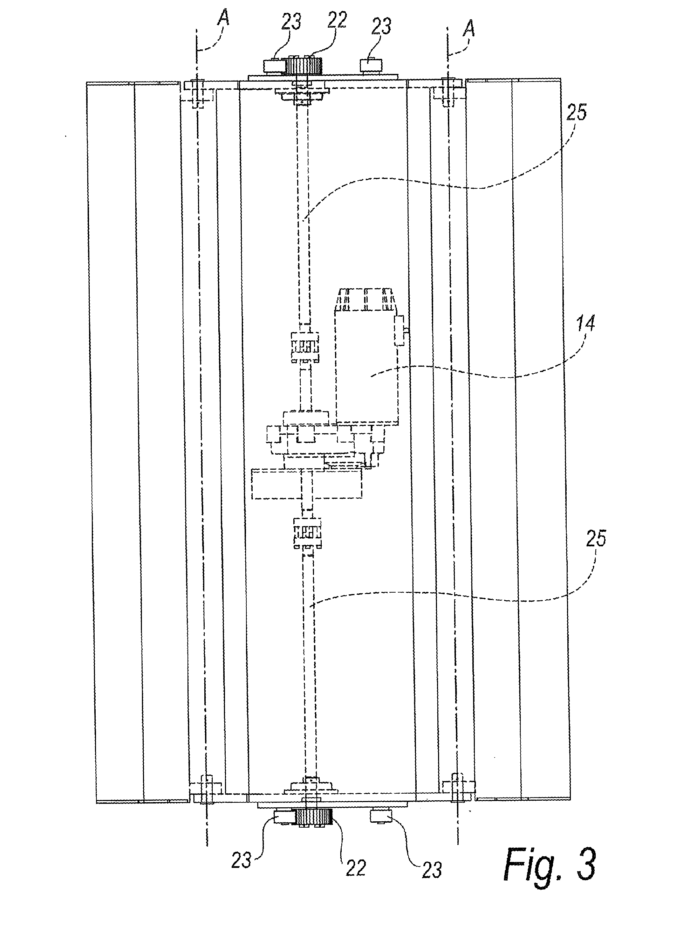

In a first embodiment shown in Figures 2 and 3, the channel 11 advantageously has at least one rack 20, conveniently two racks 20, that run longitudinally thereto, each associated with a wall 18 and provided with a back 21 that lies opposite its set of teeth and is directed toward the grille 12.

The movement means 15 comprise:
- at least one pinion 22, advantageously two pinions 22 that protrude from opposite sides of the box-like body 13, each one meshing with one of the racks 20,
- at least one roller 23, conveniently two pairs of rollers 23, each pair engaging a rack 20, the respective rollers 23 slidingly engaging the back 21 of the rack 20, for the movement of the box-like body 13 so that each of the two racks 20 is comprised between the pair of rollers 23 and the pinion 22, which preferably engages the rack 20 in an intermediate position with respect to the engagement positions of the rollers 23 with the back 21.

In this manner, the rollers 23 support the box-like body 13 in addition to retaining its pinions 22 so that they mesh within the respective racks.

The box-like body 13 in fact conveniently rests on the two racks 20, by means of the two pairs of rollers 23, so as to be able to slide along such anteroposterior direction.

To contrast the fall of the waste onto the racks 20, conveniently there are gutters 24, which are associated with the walls 18 of the channel 11 and are arranged between the grille 12 and the racks 20.

In order to move the box-like body 13 along such anteroposterior direction, the pinions 22 are connected advantageously to the electric motor 14 by way of transmission shafts 25.

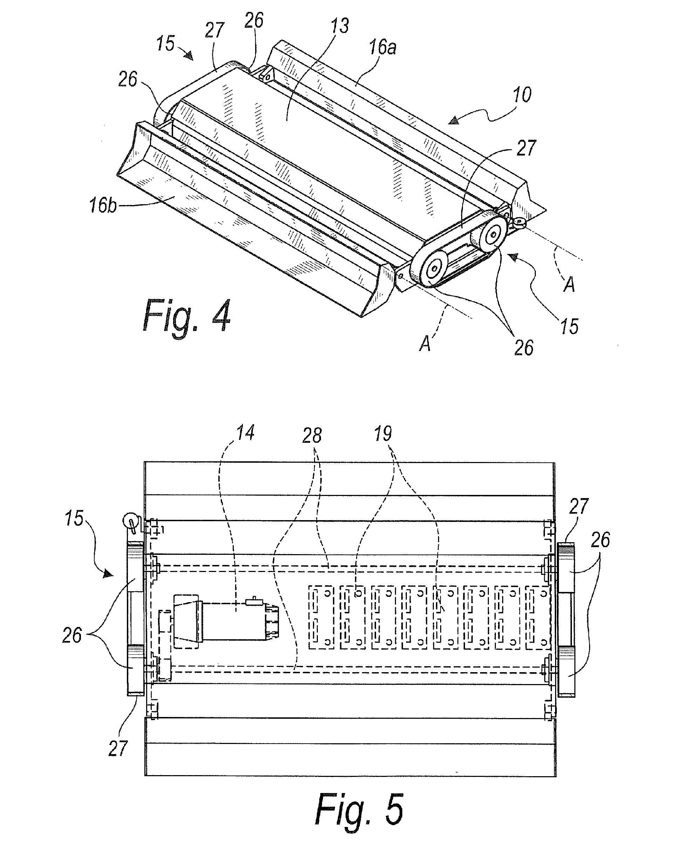

In a second embodiment, shown by way of non-limiting example in Figures 4 and 5, the movement means 15 conveniently comprise symmetrically, on both sides of the box-like body 13, at least two wheels 26, which are associated by means of a track 27 that engages the bottom 17 of the channel 11, for the movement of the box-like body 13 along such anteroposterior direction.

Preferably, the wheels 26 are associated with the ones that are symmetrical with respect to the box-like body 13 by way of shafts 28, with at least one of which the electric motor 14 for moving the box-like body 13 is associated.

Conveniently, the channel 11 comprises gutters 24 for contrasting the fall of the waste onto the tracks 27, which are associated with the walls 18 of the channel 11 in intermediate positions between the grille 12 and the bottom 17.

The operation of the collection device according to the invention is as follows.

During the cutting operations, the collection device 10 moves back and forth along the channel 11 in which it is installed by way of the movement means 15 actuated by the electric motor 14.

In this manner, the scrapers 16a and 16b, depending on the direction of motion, scrape the bottom 17 and the portions that are adjacent thereto of the walls 18 of the channel 11, collecting the waste that has fallen therein through the grille 12 during the cutting operations and pushing it toward the ends of the channel 11.

Once one end of the channel 11 has been reached, the collection device 10 has the corresponding scraper 16a or 16b that preferably cantilevers out of the channel 11 and therefore is free to rotate about the axes A in order to discharge outside the channel 11 the waste collected therein.

In practice it has been found that the invention achieves the proposed aim and objects, providing a collection device, particularly for collecting waste from metal plate cutting work, that removes automatically the waste from the drop channel without requiring the simultaneous suspension of cutting operations.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. PD2007A000291 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A collection device (10), particularly for collecting waste from metal plate cutting work, which can be accommodated in a waste drop channel (11) that lies below the waste discharge grille (12), **characterized in that** it comprises a box-like body (13) that is adapted to accommodate motor means connected to means (15) for moving said box-like body (13) in an anteroposterior direction, at least one front scraper (16a) and at least one rear scraper (16b), adapted to collect the waste, being connected to said box-like body (13).

2. The collection device according to claim 1, **characterized in that** said scrapers (16a, 16b) engage slidingly the bottom (17) of said channel (11) along its entire width, simultaneously engaging portions of the lateral walls (18) thereof that are adjacent to the bottom (17).

3. The collection device according to the preceding claims, **characterized in that** said scrapers (16a, 16b) are pivoted to said box-like body (13) so that they can rotate about axes (A) that lie substantially transversely to said anteroposterior direction, in order to discharge waste at the ends of said channel (11), by means of their rotation about said axes (A).

4. The collection device according to one or more of the preceding claims, **characterized in that** said motor means comprise an electric motor (14) that is connected to said movement means (15).

5. The collection device according to one or more of the preceding claims, **characterized in that** it comprises electric batteries (19) for supplying power to said electric motor (14), said batteries (19) being accommodated in said box-like body (13).

6. The collection device according to one or more of the preceding claims, **characterized in that** in a first preferred embodiment said channel (11) has at least one rack (20), which extends longitudinally thereto, said movement means (15) comprising at least one pinion (22) that meshes with said at least one rack (20).

7. The collection device according to one or more of the preceding claims, **characterized in that** said movement means (15) comprise at least one roller (23) for retaining said at least one pinion (22) so that it meshes with said at least one rack (20), said at least one rack (20) having a back (21) that lies opposite its set of teeth and can engage slidingly said at least one roller (23) for the movement of said box-like body (13) so that said at least one rack (20) is comprised between said at least one pinion (22) and said at least one retention roller (23).

8. The collection device according to one or more of the preceding claims, **characterized in that** it comprises at least one transmission shaft (25), which is connected to said electric motor (14) and to said at least one pinion (22) for the movement of said box-like body (13).

9. The collection device according to one or more of the preceding claims, **characterized in that** said at least one rack (20) comprises two racks (20), which are associated with said channel (11), one for each side wall (18) of said channel (11), and has said back (21) that faces said grille (12), said at least one pinion (22) comprising two pinions (22) that protrude, one for each side, from said box-like body (13), each meshing in one of said two racks (20), said at least one roller (23) comprising two pairs of rollers (23), each of said pairs engaging one of said two racks (20) at said back (21) in order to support said box-like body (13) so that it rests on said two racks (20) by way of said two pairs of rollers (23) so that it can slide along said anteroposterior direction.

10. The collection device according to one or more of the preceding claims, **characterized in that** said channel (11) comprises gutters (24) connected to said side walls (18), in an intermediate position between said grille (12) and said bottom (17), to contrast the fall of the waste onto said racks (20).

11. The collection device according to one or more of claims 1 to 5, **characterized in that** in a second preferred embodiment said movement means (15) comprise, symmetrically on both sides of said box-like body (13), at least two wheels (26), which are associated by means of a track (27) that engages the bottom (17) of said channel (11) for the movement of said box-like body (13) along said anteroposterior direction.

12. The collection device according to one or more of claims 1 to 5 and 11, **characterized in that** said wheels (26) are associated with the wheels that are symmetrical thereto with respect to said box-like body (13) by way of shafts (28) for their joint rotation.

13. The collection device according to one or more of claims 1 to 5, 11 and 12, **characterized in that** said electric motor (14) is associated with at least one of said shafts (28), for the movement of said box-like body (13) along said anteroposterior direction under the actuation of said electric motor (14).

14. The collection device according to one or more of claims 1 to 5, 11, 12 and 13, **characterized in that** said channel (11) comprises gutters (24) connected to said side walls (18), in an intermediate position between said grille (12) and said bottom (17), to contrast the fall of the waste onto the corresponding said track (27).
